# EUROPEAN PATENT SPECIFICATION

(11) **EP 4 006 383 B1**
(45) Date of publication and mention of the grant of the patent: **30.04.2025**
(21) Application number: 21766368.1
(22) Date of filing: 19.04.2021
(51) Int. Cl.: F16H 25/20, B23Q 5/40, B65G 35/00

(54) **FLEXIBLE CONNECTION STRUCTURE OF LEAD SCREW**
FLEXIBLE VERBINDUNGSSTRUKTUR EINER FÜHRUNGSSCHRAUBE
STRUCTURE DE RACCORDEMENT FLEXIBLE DE VIS-MÈRE

(30) Priority: 29.09.2020 CN 202011055107
(43) Date of publication of application: 01.06.2022
(73) Proprietor: CHOTEST TECHNOLOGY INC., Shenzhen, Guangdong 518000 (CN)
(72) Inventor: ZHANG, Hejun, Shenzhen, Guangdong 518000 (CN); XU, Aiwen, Shenzhen, Guangdong 518000 (CN)
(74) Representative: Isern Patentes y Marcas S.L.
(86) International application number: PCT/CN2021/088146
(87) International publication number: WO 2022/068179

(56) References cited:
- EP-A1- 3 450 798
- CN-A- 109 262 339
- CN-A- 109 262 339
- CN-A- 112 173 608
- CN-U- 202 922 214
- JP-A- H11 108 143
- JP-B2- 4 858 629
- US-A- 4 597 303

## Description

### TECHNICAL FIELD

The present invention relates to a lead screw, and in particular, to a flexible connecting structure of a lead screw and a flash measuring instrument stage.

### BACKGROUND

With the advent of the Industry 4.0 era, accompanied with the continuous and rapid development of the precision machining and manufacturing technology, more and more products have increasingly strict requirements for precision, the measurement requirements for products are becoming increasingly diversified, and the requirements for the measurement efficiency of products are getting higher. For many products, it is not only simply required to measure 2D dimensions thereof, but also it is necessary to measure geometric tolerances, such as the profile, coaxiality, position, roundness, or angle, and 3D dimensions of the products quickly and efficiently, so as to meet the rapidly changing product demands. Therefore, conventional measuring methods and tools, for example, rulers, calipers, micrometers, dial indicators, or other measuring tools, and even the conventional imaging instruments, have limited measurement ranges and modes and cannot be used to measure many products. In addition, the measurement efficiency thereof is low and cannot meet the requirements of product precision and geometric tolerance measurement. To better inspect geometric patterns of some complex products, a higher-end, more efficient, and high-precision one-click flash measuring instrument came into being.

The one-click flash measuring instrument is an image size precision measuring instrument with more advantages than the conventional imaging instruments, and is mainly used for one-click measurement of dimensions and geometric tolerances of 2D dimension, thickness, shape profile, coaxiality, position, roundness, or the like. Based on the measurement principles of imaging instruments, the flash measuring instrument adopts a double telecentric high-resolution optical lens, combines a high-precision image analysis algorithm, and incorporates the one-click flash measurement principle. In a CNC mode, only by pressing the start button, the instrument can automatically position the object to be measured, match the template, measure and evaluate, and generate the report according to the shape of the workpiece, thus realizing one-click fast and accurate measurement.

In the field of image measurement, the existing 2D stage has a bulky structure, is not light and concise enough, and has a relatively low production and assembly efficiency. Therefore, the manufacturing cycle is slightly long, which brings inconvenience to rapid production of instruments in batches. At present, the modes of the connection (the existing technical solutions) between the lead screw and the moving part of the one-click flash measuring instrument stage on the market mainly include the following:
1. The mode of connection between the connecting seat of the stage transmission lead screw nut and the stage moving part is rigid and hard connection, with the advantages of simple structure and firm connection and the disadvantages of having a high requirement on the precision of part machining and having some difficulties in assembling the lead screw transmission and stage moving parts, due to the restricted degree of freedom when combining and assembling the connecting seat of the lead screw nut and the moving part body.
2. The mode of connection between the connecting seat of the stage transmission lead screw nut and the stage moving part is resilient connection. The main element of such the resilient connection is a connecting member made of a spring steel material. The two degrees of freedom between the connecting seat of the lead screw nut and the stage moving part are not completely restricted by using the resilience of the material. The advantage thereof is that the assembly process requirements are lower than those of rigid and hard connection, and the reliability is higher than that of rigid and hard connection. The disadvantage is that the material and thickness of spring steel determine the resilience, and improper use will lead to improper matching between resilience and lead screw transmission. The rigidity still exists, and the lead screw may still produce slight deflection deformation in the long-term movement process, which will eventually lead to the change of telecontrol precision of the stage. Therefore, this resilient connection, to some extent, pertains to weakened rigid and hard connection. EP 3 450 798 A1 describes a feed mechanism comprising a feed screw shaft, a nut and a moving body. The moving body or the nut includes a convex portion, and the moving body is pushed by the nut through only the convex portion to allow an inclination of the moving body with respect to the nut in a case in which the moving body is moved by a movement of the nut.

The disadvantages of the existing technical solutions are as follows:
1) The connecting structure is of rigid and hard connection, and due to the restricted degree of freedom when combining and assembling the connecting seat of the lead screw nut and the moving part body, thus requiring high precision of part machining and having some difficulties in assembling the lead screw transmission and stage moving parts.
2) The connecting structure is of a resilient and hard connection, the material and thickness of spring steel determine the resilience, and improper use will lead to improper matching between resilience and lead screw transmission. The rigidity still exists, and the lead screw may still produce slight deflection deformation in the long-term movement process, which will eventually lead to the change of telecontrol precision of the stage.

### SUMMARY

To resolve the problems in the existing technology, the present invention provides a flexible connecting structure of a lead screw and a flash measuring instrument stage, which better eliminates the impact by an external transmission force of the moving shaft of the stage, and enables the motion precision of the stage to be stable and reliable for a long time.

The present invention provides a flexible connecting structure of a lead screw according to claim 1.

As a further improvement of the present invention, force transfer directions of the resilient dome structure and the insertion block are parallel to the linear guide rail.

According to the present invention, the resilient dome structure includes a first point contact mechanism and a second point contact mechanism located on two sides of recess, and the two sides of the insertion block are in point contact with the first point contact mechanism and the second point contact mechanism, respectively.

According to the present invention, the first point contact mechanism is a resilient point contact mechanism and the second point contact mechanism is a rigid point contact mechanism.

According to the present invention, the first point contact mechanism includes a resilient ball head plunger, which includes a resilient retractable ball head, and the second point contact mechanism includes a ball push rod, which includes a rigid fixed ball head, the two sides of the insertion block being in point contact with the resilient retractable ball head and the rigid fixed ball head.

According to the present invention, axes of the resilient ball head plunger and the ball push rod are both parallel to the linear guide rail, there are two resilient ball head plungers, and there is one ball push rod, the point contact formed between the two sides of the insertion block and the two resilient retractable ball heads and one rigid fixed ball head presenting an isosceles triangle distribution.

As a further improvement of the present invention, the resilient ball head plunger is mounted on the dome mounting connecting block through a moving and positioning structure.

As a further improvement of the present invention, the axial push block is not in contact with the dome mounting connecting block except for point contact.

According to the present invention, the axial push block is L-shaped, the insertion block being an upright portion and a transverse portion being a base, and a gap is provided between the base and the dome mounting connecting block.

The present invention further provides a flash measuring instrument stage, including the flexible connecting structure of the lead screw according to any of the above descriptions.

The beneficial effects of the present invention are that: the flexible connecting structure between the lead screw transmission and moving parts is a point contact type flexible structure, and impact by an external transmission force of a moving shaft of the stage is well eliminated. Even if the lead screw is used for a long time, only a tiny deflection deformation and deformation caused by thermal expansion and contraction of the lead screw due to the influence of temperature are produced, and the moving straightness precision, moving angular pendulum precision, and linear positioning precision of the stage can still be guaranteed not to be affected, so that the long-term moving precision of the stage is stable and reliable, thus ensuring the measurement precision of the instrument. On the other hand, the difficulties in production and assembly and process can further be reduced, and the manufacturing cycle can be reduced, thereby efficiently completing the batch production by using the stage, and reducing costs for enterprises.

### BRIEF DESCRIPTION OF THE ACCOMPANYING DRAWINGS

FIG. 1 is a schematic diagram of a flexible connecting structure of a lead screw of the present invention; and
FIG. 2 is a partially enlarged view of the position A in FIG. 1.

### DETAILED DESCRIPTION OF THE EMBODIMENTS

The present invention is further explained below with reference to the accompanying drawings and specific embodiments.

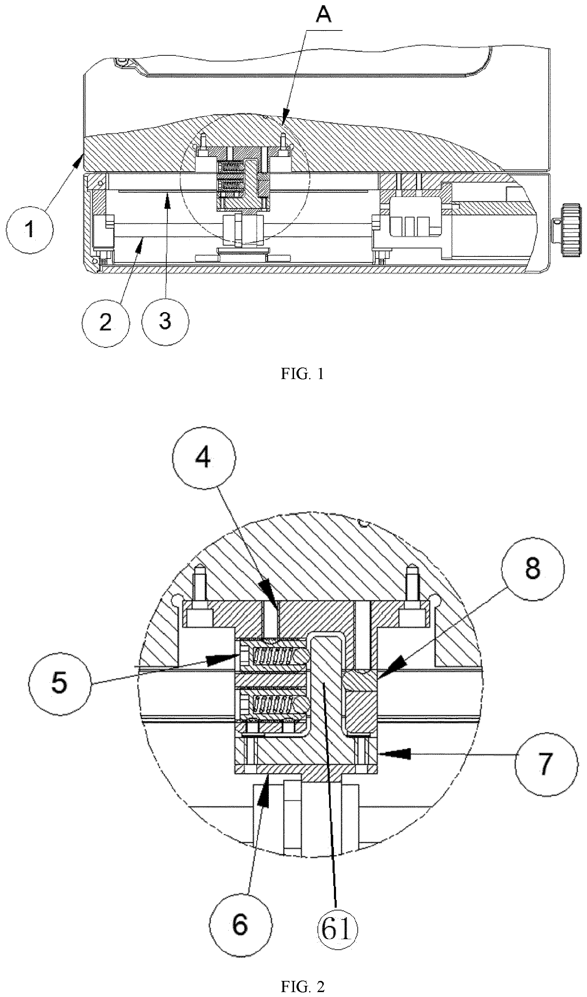

As shown in FIG. 1 and FIG. 2, a flexible connecting structure of a lead screw mainly adopts a structure in which a slotted resilient dome structure is disposed on a side of a stage moving part 1. A linear guide rail 3 is used as a moving guide on the transmission side of the lead screw, an axial push block 7 secured on a sliding block on the linear guide rail is disposed additionally to be connected to the lead screw nut seat 6, and together clamped into the slotted resilient dome structure, thereby forming a flexible connecting structure. The flexible connecting structure further includes: a dome mounting connecting block 4, ball head plungers 5, a lead screw nut seat 6, an axial push block 7, and a ball push rod 8. The dome mounting connecting block 4 is secured on a side surface of the stage moving part 1. Two ball head plungers 5 are mounted on the left end of the dome mounting connecting block 4, and a ball push rod 8 is tightly secured in a hole at the right end thereof. An inner part of each of the ball head plungers 5 is of a resilient structure, and therefore the ball head thereof is a retractable ball head. The ball push rod 8 is opposite to the ball head plungers 5, thereby forming a slotted resilient dome structure. In the lead screw transmission structure, the lead screw nut seat 6 is secured on a side surface of the axial push block 7, which is secured on a side surface of a sliding block on the linear guide rail 3 and therefore can perform transmission by means of the lead screw and can move right and left, the axial push block 7 is L-shaped, and an insertion block 61 is clamped into the slotted resilient dome structure, thereby forming a flexible connecting structure. The axial push block 7 is in point contact with the ball head plungers 5 and the ball push rod 8, separately. A gap of at least 1 mm is formed between the non-contact portion of the axial push block 7 and a periphery of a slot on the dome mounting connecting block 4. The force by which the axial push block 7 is clamped can be adjusted by adjusting mounting positions of the ball head plungers 5. In the transmission process of the lead screw, the axial push block 7 pushes the stage moving part 1 to carry out moving and positioning. Technical points: One end is used as the resilient dome, and the resilience can be adjusted at the end of the resilient dome. The other end is a rigid dome, and due to the acting force of the resilient dome, one plane of the axial push block 7 is in tight contact with the rigid dome, and will never be separated. The two sides surfaces of the axial push block 7 are in point contact with the end of the resilient dome and the end of the rigid dome respectively, and therefore the moving precision of the stage is always kept unchanged no matter whether a moving axis of the stage moving part is parallel to that of the lead screw transmission.

In the structure, the resilient dome may be in other forms, for example, a resilient sheet, an air chuck, or the like. The lead screw transmission may be polished rod friction transmission, gear-rack transmission, belt transmission, or the like.

The present invention further provides a flash measuring instrument stage, including the flexible connecting structure of the lead screw according to any of the above descriptions.

The flexible connecting structure of a lead screw and the flash measuring instrument stage provided in the present invention have the following progresses:
1) The present invention eliminates the impact by an external force of the stage in the direction of the moving shaft, lowers the mounting requirement for the degree of parallelism between the moving axis of the stage moving part and that of the lead screw transmission, and adopts modular design, thereby having a low requirement on the precision of parts and a low manufacturing cost, and being easy to implement.
2) Even if the lead screw is used for a long time, only a tiny deflection deformation and deformation caused by thermal expansion and contraction of the lead screw due to the influence of temperature are produced, and the moving straightness precision, moving angular pendulum precision, and linear positioning precision of the stage can still be guaranteed not to be affected, so that the long-term moving precision of the stage is stable and reliable, thus ensuring the measurement precision of the instrument.
3) The machining requirements and assembling difficulties are lowered, the bath production and assembly of the stage is more stable, the delivery cycle of the whole machine is shortened, and the cost is reduced for enterprises.

The flexible connecting structure of the lead screw and the flash measuring instrument stage provided in the present invention can be used in the precision measurement industry, the automation equipment and measurement industry, the biomedical industry, or the like.

The foregoing content is a further detailed description of the present invention in combination with specific preferred embodiments and it cannot be considered that the specific implementation of the present invention is only limited to these descriptions. For those of ordinary skill in the art to which the present invention pertains, various modifications can be made without departing from the scope of the invention as defined in the accompanying claims.

## Claims

1. A flexible connecting structure of a lead screw, comprising: a lead screw(2), a lead screw nut (6), a linear guide rail(3), a push block(7), a connecting block(4), and a moving part(1), wherein the linear guide rail(3) is used as a moving guide on the transmission side of the lead screw(2), the lead screw nut (6) is threadably coupled to the lead screw(2), the push block(7) is fixedly connected to the lead screw nut (6) and fixedly connected to a sliding block on the linear guide rail(3), the moving part(1) is fixedly connected to the connecting block(4), **characterized in that** the connecting block(4) is provided with a recess having a resilient dome structure, the resilient dome structure comprises a first point contact mechanism and a second point contact mechanism located on two sides of the recess, the first point contact mechanism is a resilient point contact mechanism and the second point contact mechanism is a rigid point contact mechanism, and the push block(7) is L-shaped and an upright portion of the push block(7) being a insertion block(61), a transverse portion of the push block(7) being a base, and a gap is provided between the base and the connecting block(4), the insertion block(61) being inserted into the recess having the resilient dome structure , two sides of the insertion block(61) are in point contact with the first point contact mechanism and the second point contact mechanism, respectively ,
wherein the first point contact mechanism comprises two resilient ball head plungers(5) which comprises a resilient retractable ball head, and the second point contact mechanism comprises a ball push rod(8) which comprises a rigid fixed ball head , the two sides of the insertion block(61) being in point contact with the resilient retractable ball head and the rigid fixed ball head , wherein axes of the resilient ball head plunger(5) and the ball push rod(8) are both parallel to the linear guide rail(3), the point contact formed between the two sides of the insertion block(61) and two resilient retractable ball heads and one rigid fixed ball head presenting an isosceles triangle distribution.

2. The flexible connecting structure of the lead screw according to claim 1, **characterized in that** force transfer directions of the resilient dome structure and the insertion block(61) are parallel to the linear guide rail(3).

3. The flexible connecting structure of the lead screw according to claim 1, **characterized in that** the resilient ball head plunger(5) is mounted on the connecting block(4) through a moving and positioning structure.

4. The flexible connecting structure of the lead screw according to claim 1, **characterized in that** the push block(7) is not in contact with the connecting block(4) except for point contact.

## Patentansprüche

1. Flexible Verbindungsstruktur einer Leitspindel, umfassend: eine Leitspindel (2), eine Leitspindelmutter (6), eine lineare Führungsschiene (3), einen Druckblock (7), einen Verbindungsblock (4) und ein bewegliches Teil (1), wobei die lineare Führungsschiene (3) als eine bewegliche Führung auf der Übertragungsseite der Leitspindel (2) verwendet wird, die Leitspindelmutter (6) schraubbar mit der Leitspindel (2) gekoppelt ist, der Druckblock (7) fest mit der Leitspindelmutter (6) verbunden ist und fest mit einem Gleitblock auf der linearen Führungsschiene (3) verbunden ist, das bewegliche Teil (1) fest mit dem Verbindungsblock (4) verbunden ist, **dadurch gekennzeichnet, dass** der Verbindungsblock (4) mit einer Ausnehmung versehen ist, die eine elastische Kuppelstruktur aufweist, wobei die elastische Kuppelstruktur einen ersten Punktkontaktmechanismus und einen zweiten Punktkontaktmechanismus umfasst, die auf zwei Seiten der Ausnehmung angeordnet sind, wobei der erste Punktkontaktmechanismus ein elastischer Punktkontaktmechanismus ist und der zweite Punktkontaktmechanismus ein starrer Punktkontaktmechanismus ist, und der Druckblock (7) L-förmig ist und ein aufrechter Abschnitt des Druckblocks (7) ein Einführblock (61) ist, ein Querabschnitt des Druckblocks (7) eine Basis ist, und ein Spalt zwischen der Basis und dem Verbindungsblock (4) vorgesehen ist, wobei der Einführblock (61) in die Aussparung mit der elastischen Kuppelstruktur eingeführt wird, wobei zwei Seiten des Einführblocks (61) jeweils in Punktkontakt mit dem ersten Punktkontaktmechanismus und dem zweiten Punktkontaktmechanismus stehen,
wobei der erste Punktkontaktmechanismus zwei elastische Kugelkopfstößel (5) umfasst, die einen elastischen einziehbaren Kugelkopf umfassen, und der zweite Punktkontaktmechanismus eine Kugeldruckstange (8) umfasst, die einen starr befestigten Kugelkopf umfasst, wobei die beiden Seiten des Einführblocks (61) in Punktkontakt mit dem elastischen einziehbaren Kugelkopf und dem starr befestigten Kugelkopf stehen, wobei die Achsen des elastischen Kugelkopfstößels (5) und der Kugeldruckstange (8) beide parallel zu der linearen Führungsschiene (3) verlaufen, wobei der Punktkontakt, der zwischen den beiden Seiten des Einführblocks (61) und zwei elastischen einziehbaren Kugelköpfen und einem starr befestigten Kugelkopf gebildet wird, eine gleichschenklige Dreiecksverteilung aufweist.

2. Flexible Verbindungsstruktur der Leitspindel nach Anspruch 1, **dadurch gekennzeichnet, dass** die Kraftübertragungsrichtungen der elastischen Kuppelstruktur und des Einführblocks (61) parallel zur linearen Führungsschiene (3) verlaufen.

3. Flexible Verbindungsstruktur der Leitspindel nach Anspruch 1, **dadurch gekennzeichnet, dass** der elastische Kugelkopfstößel (5) über eine Bewegungs- und Positionierungsstruktur am Verbindungsblock (4) angebracht ist.

4. Flexible Verbindungsstruktur der Leitspindel nach Anspruch 1, **dadurch gekennzeichnet, dass** der Druckblock (7) mit Ausnahme eines Punktkontakts keinen Kontakt zu dem Verbindungsblock (4) hat.

## Revendications

1. Structure de liaison souple d'une vis-mère, comprenant : une vis-mère (2), un écrou de vis-mère (6), un rail de guidage linéaire (3), un bloc de poussée (7), un bloc de liaison (4), et une partie mobile (I), dans laquelle le rail de guidage linéaire (3) est utilisé comme guide mobile sur le côté de la transmission de la vis-mère (2), l'écrou de vis-mère (6) est accouplé de manière filetée à la vis-mère (2), le bloc de poussée (7) est relié de manière fixe à l'écrou de vis-mère (6) et relié de manière fixe à un bloc coulissant sur le rail de guidage linéaire (3), la partie mobile (I) est reliée de manière fixe au bloc de liaison (4), **caractérisée en ce que** le bloc de liaison (4) est pourvu d'une cavité ayant une structure de dôme élastique, la structure de dôme élastique comprend un premier mécanisme de contact ponctuel et un second mécanisme de contact ponctuel situés sur les deux côtés de l'évidement, le premier mécanisme de contact ponctuel est un mécanisme de contact ponctuel élastique et le second mécanisme de contact ponctuel est un mécanisme de contact ponctuel rigide, et le bloc de poussée (7) est en forme de L et une partie verticale du bloc de poussée (7) étant un bloc d'insertion (61), une partie transversale du bloc de poussée (7) étant une base, et un espace est prévu entre la base et le bloc de liaison (4), le bloc d'insertion (61) étant inséré dans la cavité ayant la structure de dôme élastique, les deux côtés du bloc d'insertion (61) sont en contact ponctuel avec le premier mécanisme de contact ponctuel et le second mécanisme de contact ponctuel, respectivement,
dans laquelle le premier mécanisme de contact ponctuel comprend deux pistons à tête sphérique élastiques (5) qui comprennent une tête sphérique rétractable élastique, et le second mécanisme de contact ponctuel comprend une tige de poussée sphérique (8) qui comprend une tête sphérique fixe rigide, les deux côtés du bloc d'insertion (61) étant en contact ponctuel avec la tête sphérique rétractable élastique et la tête sphérique fixe rigide, dans laquelle les axes du piston de tête à sphérique élastique (5) et de la tige de poussée sphérique (8) sont tous deux parallèles au rail de guidage linéaire (3), le contact ponctuel formé entre les deux côtés du bloc d'insertion (61) et deux têtes sphériques rétractables élastiques et une tête sphérique fixe rigide présentant une distribution de triangle isocèle.

2. Structure de liaison souple de la vis-mère selon la revendication 1, **caractérisée en ce que** les directions de transfert de force de la structure de dôme élastique et du bloc d'insertion (61) sont parallèles au rail de guidage linéaire (3).

3. Structure de liaison souple de la vis-mère selon la revendication 1, **caractérisée en ce que** le piston à tête sphérique élastique (5) est monté sur le bloc de liaison (4) par le biais d'une structure mobile et de positionnement.

4. Structure de liaison souple de la vis-mère selon la revendication 1, **caractérisée en ce que** le bloc de poussée (7) n'est pas en contact avec le bloc de liaison (4) à l'exception d'un contact ponctuel.
